# EUROPÄISCHE PATENTSCHRIFT

(11) **EP 3 464 929 B1**
(45) Veröffentlichungstag und Bekanntmachung des Hinweises auf die Patenterteilung: **15.07.2020**
(21) Anmeldenummer: 17729026.9
(22) Anmeldetag: 11.05.2017
(51) Int. Cl.: F16F 1/371

(54) **FEDERELEMENT FÜR EINEN FAHRZEUGSTOSSDÄMPFER, SOWIE FAHRZEUGSTOSSDÄMPFER UND VERWENDUNG DIESES FEDERELEMENT**
SPRING ELEMENT FOR A VEHICLE SHOCK ABSORBER, AS WELL AS VEHICLE SHOCK ABSORBER AND USE OF THIS SPRING ELEMENT
ÉLÉMENT DE RESSORT POUR UN AMORTISSEUR DE VÉHICULE AUTOMOBILE, AINSI QUE AMORTISSEUR DE VÉHICULE AUTOMOBILE ET UTILISATION DE L'ÉLÉMENT DE RESSORT

(30) Priorität: 27.05.2016 EP 16171690
(43) Veröffentlichungstag der Anmeldung: 10.04.2019
(73) Patentinhaber: BASF SE, 67056 Ludwigshafen am Rhein (DE)
(72) Erfinder: THYE-MOORMANN, Frank, 49448 Lemfoerde (DE)
(74) Vertreter: BASF IP Association
(86) Internationale Anmeldenummer: PCT/EP2017/061382
(87) Internationale Veröffentlichungsnummer: WO 2017/202620

(56) Entgegenhaltungen:
- WO-A1-2004/097250
- DE-U- 1 800 990
- DE-U1- 20 204 328
- US-A1- 2011 133 380

## Beschreibung

Die vorliegende Erfindung betrifft ein Federelement für einen Fahrzeugstoßdämpfer. Die Erfindung betrifft ferner einen Fahrzeugstoßdämpfer mit einem solchen Federelement, und ein Fahrzeug, insbesondere ein Personenkraftfahrzeug, mit einem solchen Stoßdämpfer.

Federelemente der vorbezeichneten Art sind allgemein bekannt. Sie werden in Automobilen beispielsweise innerhalb des Fahrwerks verwendet. Sie werden insbesondere als schwingungsdämpfende Federelemente eingesetzt. Fast immer werden neben dem Hauptstoßdämpfer, der häufig auf der Basis von Metallfedern und/oder Druckgaselementen basiert, noch weitere Federelemente (Zusatzstoßdämpfer), bevorzugt aus elastischem Material eingesetzt. Üblicherweise sind diese Federelemente Hohlkörper, die konzentrisch geformt sind und entlang der Federachse unterschiedliche Durchmesser und/oder Wandstärken aufweisen. Grundsätzlich könnten diese Federelemente auch als Hauptstoßdämpfer fungieren, sie übernehmen aber in Kombination mit dem Hauptstoßdämpfer häufig eine Endanschlagfunktion. Dabei beeinflussen sie die Kraft/Weg-Kennlinie des gefederten Rades durch das Ausbilden oder Verstärken einer progressiven Charakteristik der Fahrzeugfederung. So können die Nickeffekte des Fahrzeuges reduziert und die Wankabstützung verstärkt werden. Insbesondere durch die geometrische Gestaltung wird die Anlaufsteifigkeit optimiert, dies hat maßgeblichen Einfluss auf den Federungskomfort des Fahrzeuges. Durch diese Funktion wird der Fahrkomfort erhöht und ein Höchstmaß an Fahrsicherheit gewährleistet. Durch die gezielte Auslegung der Geometrie ergeben sich über die Lebensdauer nahezu konstante Bauteileigenschaften.

Eine Schwierigkeit in der dreidimensionalen Ausgestaltung der Zusatzfedern besteht in einem häufig gewünschten, besonders weichen Einsatz der Kraftaufnahme, was auch als weicher Anlauf des Federelementes bezeichnet wird. Um einen derartigen weichen Anlauf zu erreichen, werden z.B. in der Offenlegungsschrift DE 102004049638 umlaufende Biegelippen beschrieben, die auch als "Blütenform" bezeichnet wird. Der Ausdehnung der Biegelippe sind aber durch die Geometrie der Zusatzfeder Grenzen gesetzt, so dass auch der weiche Anlauf nur in sehr engen Grenzen variiert werden kann. Auch ist diese Formgebung mit einer Biegelippe für besonders hohe Belastungen nur bedingt geeignet. Weiterhin weist die Biegelippe in der Herstellung, die überwiegend im Schäumverfahren erfolgt, wesentliche Nachteile auf. Der Hohlraum des Federelementes wird beim Schäumvorgang üblicherweise durch einen Kern definiert, von dem das Federelement nach der Aushärtung gezogen werden muss. Die dabei auftretenden Belastungen der eng anliegenden Biegelippe, führen zu einem nicht unwesentlichen Ausschuss. Ein weiterer Nachteil besteht in dem aufwändigen Entgraten der mit dem der Fertigung der Biegelippe einhergeht. Dokument WO 2004/097250 A1 offenbart alle technischen Merkmale des Oberbegriffs der Ansprüche 1 und 7.

Federelemente der eingangs bezeichneten Art sind für ihren Einsatz als Endanschlagsdämpfer vorzugsweise mit einer progressiven Kraft/Weg-Kennlinie ausgebildet. Dies bedeutet, dass bei einer einsetzenden Kompression ausgehend vom unkomprimierten Grundzustand des Federelements zunächst nur wenig Kraft für eine Verformung aufgebracht werden muss. Bei fortschreitender Kompression des Federelements nimmt die Steifigkeit des Materials mit immer mehr zu.

Es hat sich herausgestellt, dass der Anstieg der Steifigkeit bei bekannten Federelementen nicht streng monoton steigend verläuft, sondern dass im Anfangsbereich der Deformation, also in einem Bereich, in dem die Steigung der Kraft/Weg-Kennlinie noch sehr gering ist, die Steifigkeit ein Zwischenmaximum einnimmt, und nach Durchschreiten des Maximums zunächst wieder abnimmt, bevor der Kennlinienverlauf stark progressiv ansteigt. Dieses Kennlinienverhalten ist in bestimmten Situationen mittels Beschleunigungssensoren im eingebauten Zustand des Federelements in einen Fahrzeugstoßdämpfer vom im Fahrzeug vorgesehenen Messsystem auch wahrnehmbar. Es besteht ein Bedarf daran, den Kennlinienverlauf der Kraft/Weg-Kennlinie bzw. den Steifigkeitsverlauf bei dem eingangs bezeichneten Federelement hinsichtlich der vorstehend beschriebenen Phänomene zu optimieren. Der Erfindung lag folglich die Aufgabe zugrunde, bei einem Federelement der eingangs genannten Art das Kompressionsverhalten zu verbessern. Insbesondere lag der Erfindung die Aufgabe zugrunde, den Steifigkeitsverlauf bei einsetzender Kompression des Federelements zu glätten.

Die Erfindung löst die ihr zugrunde liegende Aufgabe bei einem Federelement der eingangs bezeichneten Art, indem sie ein Federelement für einen Fahrzeugstoßdämpfer vorschlägt, mit einer Längsachse und einem sich entlang der Längsachse erstreckenden Grundkörper, der elastisch zwischen einem unkomprimierten Grundzustand und einem in Richtung der Längsachse komprimierten Zustand verformbar ist, einer außen am Grundkörper umlaufenden Nut, und einem in der Nut angeordneten Stützring, wobei im unkomprimierten Grundzustand des Grundkörpers eine oder mehrere Aussparungen zwischen dem Stützring und dem Grundkörper in der Nut ausgebildet sind. Der Stützring ist erfindungsgemäß dazu vorgesehen, die Steifigkeit des Federelements bei zunehmender Kompression zu erhöhen und für ein stark progressives Kompressionsverhalten zu sorgen. Insbesondere wird durch den Stützring die Lebensdauer erhöht, weil die Querdehnung begrenzt wird. Das Material des Grundkörpers wird geschützt und zusätzliches Blockmaß aufgebaut. Unter Blockmaß wird hierbei die bei maximaler Kompression des Grundkörpers noch verbleibende Ausdehnung in Richtung der Längsachse verstanden. Der Stützring erhöht lokal die Steifigkeit des Federelements, da sich das Federelement im Bereich des Stützrings nur erschwert in radialer Richtung ausdehnen kann.

Die Erfindung macht sich hierbei die Erkenntnis zunutze, dass der Effekt des Stützrings infolge der einen oder mehreren Aussparung(en) etwas gemäßigter auftritt. Bei fortschreitender Verformung des Federelements vom unkomprimierten Grundzustand in einen komprimierten Zustand weicht das Material des Federelements einerseits in Richtung der Längsachse, andererseits aber auch in radialer Richtung nach außen hin aus. Dadurch, dass zwischen dem Stützring und der den Stützring aufnehmenden Nut eine oder mehrere Aussparungen vorgesehen sind, verbleiben zunächst in den Aussparungen noch Freiräume, in die das Material des Federelements vergleichsweise leicht ausweichen kann. Da sich das Material bei einer Verformung den Weg des geringsten Widerstands sucht, wird bei einem Kompressionsvorgang des Federelements gerade im Bereich der einsetzenden Kompression das Anlaufverhalten des Federelements verbessert und der Steifigkeitsverlauf geglättet. Unter dem Steifigkeitsverlauf wird hierbei die zeitliche Ableitung des Kraft/Weg-Verlaufs verstanden. Erst nachdem die Aussparungen im Wesentlichen vollständig mit Material des Federelements aufgefüllt sind, kommt der stützende Effekt des Stützrings voll zum Tragen, und die Kraft/Weg-Kennlinie schlägt ihren stark progressiven Verlauf ein.

In bevorzugten Ausführungsformen des erfindungsgemäßen Federelements sind die Aussparungen in Form von zylindrischen, teilzylindrischen oder hohlzylindrischen Ausnehmungen, konisch verjüngten Ausnehmungen, teilkugelförmigen Ausnehmungen, polygonalen, oder teilpolyederförmigen Ausnehmungen, oder einer Kombinationen mehrerer jener Formen ausgebildet sind. Unter konisch verjüngten Ausnehmungen werden solche Ausnehmungen verstanden, die in Richtung des Grundes der Ausnehmung hin verjüngt verlaufen und gewissermaßen einem negativen Kegelstumpf entsprechen. Auch die teilpolyederförmigen Ausnehmungen haben vorzugsweise einen in Richtung des Grundes der Ausnehmung kleiner werdenden freien Querschnitt. Besonders bevorzugt werden die teilkugelförmigen Ausnehmungen. Diese haben sich aufgrund ihres Verformungsverhaltens als vorteilhaft zum Glätten des Steifigkeitsverlaufs herausgestellt.

In einer weiteren bevorzugten Ausführungsform sind mehrere Aussparungen vorgesehen und gleichmäßig über den Umfang der Nut verteilt angeordnet. Vorzugsweise sind über den Umfang der Nut 3, 4, 6, 8, 10, 12, 15, 16, 20 oder mehr Aussparungen angeordnet, die voneinander beabstandet sein können, oder alternativ vorzugsweise ineinander übergehen.

In bevorzugten Ausführungsformen besteht der Grundkörper teilweise oder vollständig aus einem Elastomer, vorzugsweise aus einem Gummi und/oder Polyisocyanat-Polyadditionsprodukt.

Dabei kann ein Federelement aus einem Elastomer bestehen, es kann aber auch aus mehreren Elastomeren bestehen, die schichtweise, schalenförmig oder in anderer Form, bzw. auch in Mischung miteinander vorliegen. Die Polyisocyanat-Polyadditionsprodukte sind bevorzugt auf der Basis von mikrozellulären Polyurethanelastomeren, auf der Basis von thermoplastischem Polyurethan oder aus Kombinationen aus diesen beiden Materialien aufgebaut, die ggf. Polyharnstoffstrukturen enthalten können.

Besonders bevorzugt sind mikrozellige Polyurethanelastomere, die in einer bevorzugten Ausführungsform eine Dichte nach DIN 53420 von 200 kg/m³ bis 1100 kg/m³, bevorzugt 300 kg/m³ bis 800 kg/m³, eine Zugfestigkeit nach DIN 53571 von 2 N/mm², bevorzugt 2 N/mm² bis 8 N/mm², eine Dehnung nach DIN 53571 von 300 %, bevorzugt 300 % bis 700 % und eine Weiterreißfestigkeit nach DIN 53515 von bevorzugt 8 N/mm bis 25 N/mm haben.

Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm.

Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukten werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Konturelemente werden in einer Ausführungsform direkt in das Gießwerkzeug integriert, in einer weiteren Ausführungsform werden sie nachträglich in den konzentrischen Grundkörper eingearbeitet. In einer bevorzugten Ausführungsform wird das konzentrische Federelement hierzu bis zur Verfestigung gekühlt, bevorzugt mit flüssigem Stickstoff und in diesem Zustand bearbeitet.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40°C bis 95°C, bevorzugt 50°C bis 90°C. Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dicht schließendes Formwerkzeug gebracht werden. Die Formteile sind nach 5 Minuten bis 60 Minuten ausgehärtet und damit entformbar. Die Menge des in das Formwerkzeug eingebrachten Reaktionsgemisches wird üblicherweise so bemessen, dass die erhaltenen Formkörper die bereits dargestellte Dichte aufweisen. Die Ausgangskomponenten werden üblicherweise mit einer Temperatur von 15°C bis 120°C, vorzugsweise von 30°C bis 110°C, in das Formwerkzeug eingebracht. Die Verdichtungsgrade zur Herstellung der Formkörper liegen zwischen 1,1 und 8, vorzugsweise zwischen 2 und 6. Die zelligen Polyisocyanat-Polyadditionsprodukte werden zweckmäßigerweise nach dem "one shot"-Verfahren mit Hilfe der Hochdruck-Technik, der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Das erfindungsgemäße Federelement weist vorzugsweise Maße, d.h. Längen und Durchmesser, auf, die für die Verwendung als Zusatzfeder und/oder Hauptstoßdämpfer angepasst sind. Vorzugsweise weist das Federelement eine Länge in Längsrichtung in einem Bereich von 30 mm bis 200 mm, besonders bevorzugt in einem Bereich von 40 mm bis 120 mm auf. Weiter vorzugsweise liebt der maximale äußere Durchmesser quer zur Längsachse des Federelements in einem Bereich von 30 mm bis 100 mm, besonders bevorzugt in einem Bereich zwischen 40 mm und 70 mm. Die Aushöhlung des Federelements liegt vorzugsweise in einem Bereich zwischen 10 mm und 30 mm.

Vorzugsweise besteht der Stützring teilweise oder vollständig aus einem thermoplastischen Kunststoff, vorzugsweise aus Polyoxymethylen (POM).

In einer weiteren bevorzugten Ausführungsform, besteht der Stützring teilweise aus einem Elastomer besteht, vorzugsweise aus Gummi, und weist ferner einen mit dem Elastomer ummantelten Metallkern auf. Als Metall wird vorzugsweise Aluminium, eine Aluminiumlegierung, Stahl, oder eine Stahllegierung verwendet. Als bevorzugtes Elastomer wird beispielsweise eine Mischung aus Butadien- und Poly-Isopren-Kautschuk (BR/IR) oder Ethylen-Propylen-Kautschuk (EPDM), verwendet besonders bevorzugt mit einer Shore-A-Härte von 45 oder höher, insbesondere von 75 +/- 5. Die Shore-A-Härte wird beispielsweise bestimmt nach DIN 53505:2000-08 oder ISO 7619-1:2012-02.

In einer weiteren bevorzugten Ausführungsform verbleibt bei montiertem Stützring in der Nut, insbesondere zumindest im Grundzustand, ein Spalt zwischen der einen oder den mehreren Aussparungen und dem Stützring, so dass Luft aus den Aussparungen entweichen kann. Hierdurch wird das Eindringen von Material des Grundkörpers in die durch die Aussparung geschaffenen Kavitäten erleichtert.

Die Erfindung löst die ihr zugrunde liegende, eingangs bezeichnete Aufgabe bei einem Fahrzeugstoßdämpfer der eingangs bezeichneten Art, indem dieser einen Stütztopf, eine relativ zu dem Stütztopf in Richtung einer Längsachse bewegbar gelagerten Dämpferkappe und ein Federelement mit einem sich entlang der Längsachse erstreckenden Grundkörper aufweist, wobei der Grundkörper elastisch zwischen einem unkomprimierten Grundzustand und einem in Richtung der Längsachse komprimierten Zustand verformbar ist, einer außen am Grundkörper umlaufenden Nut, und einem in der Nut angeordneten Stützring, wobei im unkomprimierten Stützring mehrere Aussparungen zwischen dem Stützring und dem Grundkörper ausgebildet sind. Hinsichtlich der Vorteile, die durch den mit dem Federelement ausgestatteten erfindungsgemäßen Fahrzeugstoßdämpfer erreicht werden, wird auf die vorstehenden Ausführungen zum Federelement verwiesen. Die vorstehenden, bevorzugten Ausführungsformen des Federelements sind zugleich auch bevorzugte Ausführungsformen des erfindungsgemäßen Fahrzeugstoßdämpfers.

Die Erfindung löst die ihr zugrunde liegende Aufgabe ferner bei einem Fahrzeug der eingangs bezeichneten Art, welches eine Anzahl von Fahrzeugstoßdämpfern aufweist, indem mindestens einer, vorzugsweise mehrere oder sämtliche der Fahrzeugstoßdämpfer nach einer der vorstehend beschriebenen bevorzugten Ausführungsformen ausgebildet sind, bzw. ein Federelement gemäß einer der vorstehend beschriebenen bevorzugten Ausführungsformen aufweisen.

Ferner betrifft die Erfindung eine Verwendung eines Federelements als Hauptstoßdämpfer oder als Zusatzfeder in einem Fahrzeugstoßdämpfer. Die Erfindung löst die ihr zugrunde liegende Aufgabe bei einer solchen Verwendung, indem das Federelement nach einer der vorstehend beschriebenen bevorzugten Ausführungsformen ausgebildet ist. Die Erfindung wird nachfolgend unter Bezugnahme auf die beigefügten Figuren anhand eines bevorzugten Ausführungsbeispiels beschrieben. Hierbei zeigen:
- Fig. 1: eine schematische räumliche Darstellung eines Federelements gemäß einem bevorzugten Ausführungsbeispiel,
- Fig. 2: eine Seitenansicht des Federelements gemäß Fig. 1,
- Fig. 3: die Seitenansicht gemäß Fig. 2 ohne Stützring,
- Fig. 4: eine Querschnittsansicht durch den Grundkörper des Federelements gemäß den Fig. 1 bis 3,
- Fig. 5: eine Einbauanordnung des Federelements gemäß den Fig. 1 bis 4,
- Fig. 6: ein Kraft/Weg-Diagramm, und
- Fig. 7: ein Steifigkeits/Weg-Diagramm

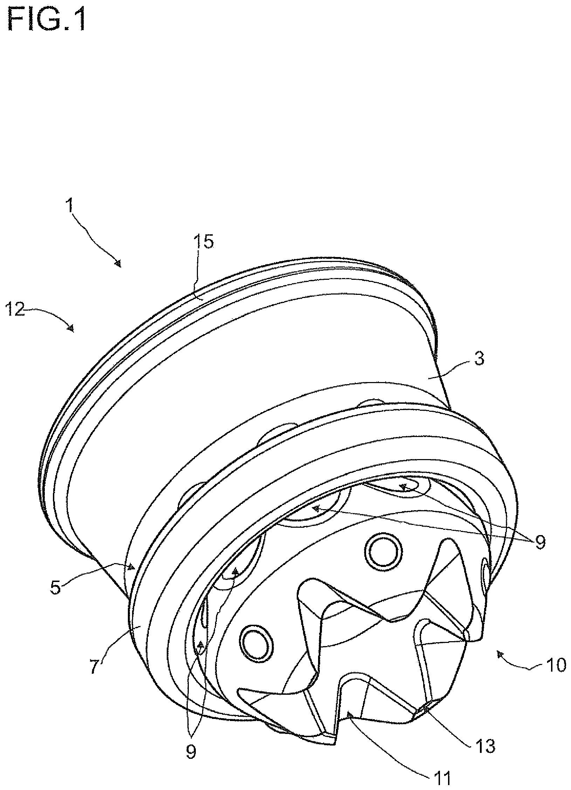

In Fig. 1 ist zunächst ein Federelement 1 gemäß einem bevorzugten Ausführungsbeispiel der Erfindung dargestellt. Das Federelement 1 weist einen Grundkörper 3 auf. Der Grundkörper 3 besteht teilweise oder vollständig aus einem Elastomer, vorzugsweise aus einem Gummi oder einem Polyisocyanat-Polyadditionsprodukt wie beispielsweise einem PUR-Schaum.

Der Grundkörper 3 weist eine im Wesentlichen kegelstumpfförmige Mantelfläche auf, an der außen eine umlaufende Nut 5 ausgebildet ist. In der Nut ist ein Stützring 7 aufgenommen. Ferner sind in der Nut 5 mehrere Aussparungen 9 in den Nutgrund eingebracht, die dazu führen, dass der Stützring 7 nicht vollständig an der Oberfläche der Nut 5 des Grundkörpers 3 anliegt, sondern mehrere, der Anzahl der Ausnehmungen 9 entsprechende Kavitäten verbleiben, solange sich der Grundkörper 3 in dem (in Fig. 1 gezeigten) unkomprimierten Grundzustand befindet.

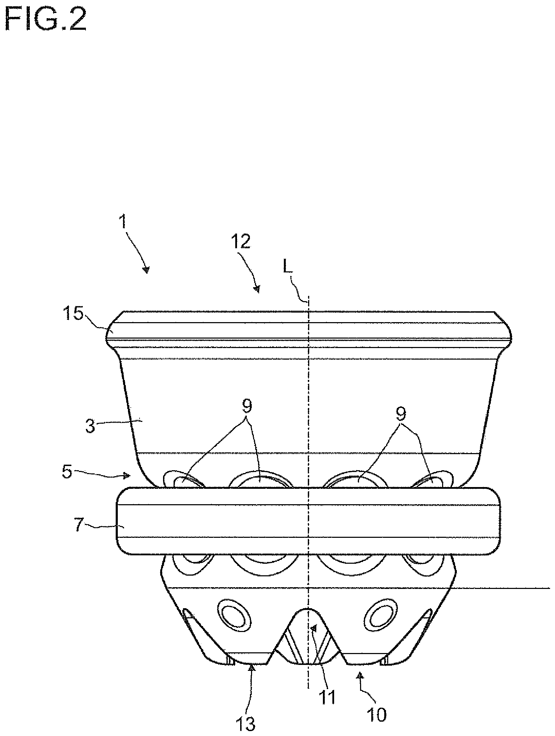

Das Federelement 1 weist eine erste Stirnseite 10 auf, in die mehrere Vertiefungen 11 eingebracht sind, sodass sich eine korrespondierende Anzahl von durch die Vertiefungen 11 benachbarten Vorsprüngen 13 ergibt, die in Richtung einer Längsachse L (Fig. 2, 4, 5) hervor ragen.

An einer der ersten Stirnseite 10 gegenüberliegenden zweiten Stirnseite 12 ist ein Montageflansch 15 ausgebildet. Der Montageflansch 15 ist dazu vorgesehen, das

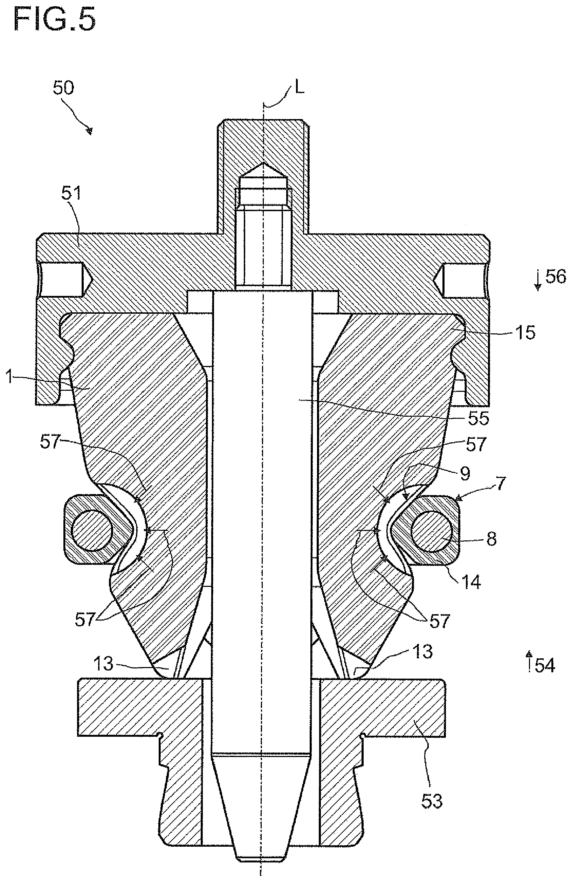

Federelement 1 in einen Stütztopf eines Fahrzeugstoßdämpfers oder einen Haltestempel einer Prüfvorrichtung (vgl. Fig. 5) einzuspannen.

Fig. 2 zeigt das Federelement 1 in einer Seitenansicht. Wie sich aus der Seitenansicht ergibt, begrenzt die Nut 5 in Richtung der Längsachse L den Bereich, in dem sich die Aussparungen 9 erstrecken. Die Aussparungen 9 werden im Wesentlichen vollständig von dem Stützring 7 überdeckt, sodass sich Verschmutzungen und größere Partikel kaum in den Aussparungen 9 anlagern können. Ein geringer Spalt zwischen den Aussparungen 9 und dem Stützring 7 ermöglicht das Entweichen von Luft, was das Eindringen von Material des Grundkörpers 3 in die durch die Aussparungen 9 geschaffenen Kavitäten erleichtert.

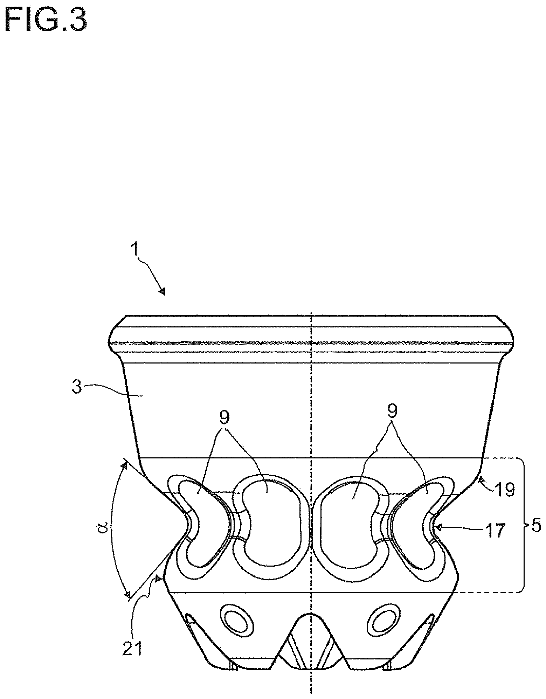

Ein genauerer Blick auf die Aussparungen 9 im Grundkörper 3 des Federelements 1 ist in Fig. 3 gegeben, wo der Stützring zur besseren Veranschaulichung ausgeblendet wird. Die Nut 5 weist zwei in einem Winkel α zueinander angestellte gegenüberliegende Nutflanken auf. Die Übergänge von den Nutflanken zur äußeren Mantelfläche des Grundkörpers 3 sind mittels eines ersten Radius 19 und eines zweiten Radius 21 fließend gestaltet. Der Nutgrund 17 weist ebenfalls einen Radius 17 auf, was ein homogeneres Verformungsverhalten im Kompressionsfall zur Folge hat. Im gezeigten Ausführungsbeispiel sind die Aussparungen 9 voneinander beabstandet.

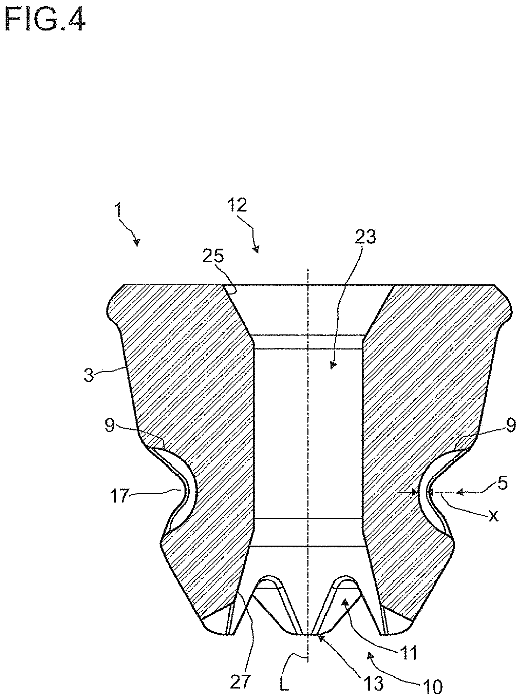

Wie sich aus Fig. 4 ergibt, ist der Grundkörper 3 des Federelements 1 als Hohlkörper ausgebildet und weist eine koaxial zur Längsachse L ausgerichtete Ausnehmung 23 auf. An der Seite der ersten Stirnseite 10 ist die Ausnehmung 23 mittels einer Kegelfläche 27 aufgeweitet. Gleichermaßen ist die Ausnehmung 23 an der zweiten Stirnseite mittels einer Kegelfläche 25 aufgeweitet.

Die Aussparungen 9 sind, betrachtet von der Mantelfläche des Grundkörpers 3 aus, tiefer in den Grundkörper 3 eingelassen als die Nut 5. Zwischen dem Nutgrund 17 und der Aussparung 9 ist ein Abstand x ausgebildet. Der Abstand x liegt vorzugsweise in einem Bereich von 1 mm oder höher, weiter vorzugsweise in einem Bereich von 1 bis 6 mm, besonders bevorzugt in einem Bereich von 2 bis 3 mm.

Die Aussparung 9 ist vorzugsweise teilkugelförmig ausgebildet. Der korrespondierende Kugeldurchmesser liegt vorzugsweise in einem Bereich von 2 mm bis 30 mm, besonders bevorzugt 8 mm oder mehr.

In Fig. 5 ist dargestellt, dass der Stützring 7 nicht monolithisch ausgebildet ist, sondern einen Kern 8 aufweist, welcher mit einem Elastomer 14 ummantelt ist. Vorzugsweise ist der Kern 8 metallisch ausgebildet.

Während in den Fig. 1 bis 4 das Federelement 1 jeweils isoliert dargestellt wurde, ist in Fig. 5 eine Einbausituation des Federelements 1 abgebildet. Das Federelement 1 ist in eine Prüfanordnung 50 eingebaut. Die Prüfanordnung 50 weist einen Haltestempel 51 auf, in den das Federelement 1 mit seinem Montageflansch 15 eingespannt ist.

Die Prüfanordnung 50 weist ferner einen Druckstempel 53 auf, der dazu eingerichtet ist, mit den Vorsprüngen 13 des Federelements 1 in Anlage gebracht zu werden.

Der Haltestempel 51, der Druckstempel 53 und das Federelement 1 werden durch einen Zentrierdorn 55 im Wesentlichen koaxial zu der Längsachse L gehalten.

Die Prüfanordnung 50 entspricht strukturell einem Fahrzeugstoßdämpfer gemäß der Erfindung. In einem solchen erfindungsgemäßen Fahrzeugstoßdämpfer 50 wäre der Haltestempel 51 ein Stütztopf, während der Druckstempel 53 eine Dämpferkappe des Fahrzeugstoßdämpfers wäre. Der Zentrierdorn 55 wäre, übertragen auf den erfindungsgemäßen Fahrzeugstoßdämpfer, eine Kolbenstange.

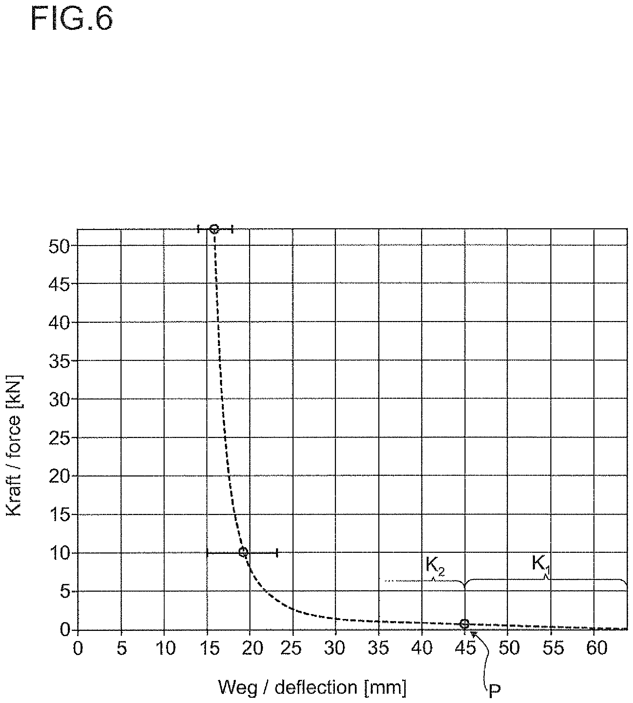

Im Falle der Prüfanordnung 50 wird zum Ermitteln einer Kraft/Weg-Kennlinie oder eines Steifigkeitsverlaufs das Federelement in Richtung der Längsachse L komprimiert. Dies geschieht durch Bewegung des Druckstempels 53 in Richtung des Pfeils 54 und/oder durch Bewegung des Haltestempels 51 in Richtung des Pfeils 56. Infolge der Relativbewegung der Stempel 51, 53 wird das Federelement 1 von dem in Fig. 5 gezeigten unkomprimierten Grundzustand aus in einen komprimierten Zustand elastisch verformt. Hierbei wird zunächst nur wenig Kraft erforderlich sein, was einen flachen Verlauf der Kraft/Weg-Kennlinie zur Folge hat (siehe Bereich K₁ in Fig. 6).

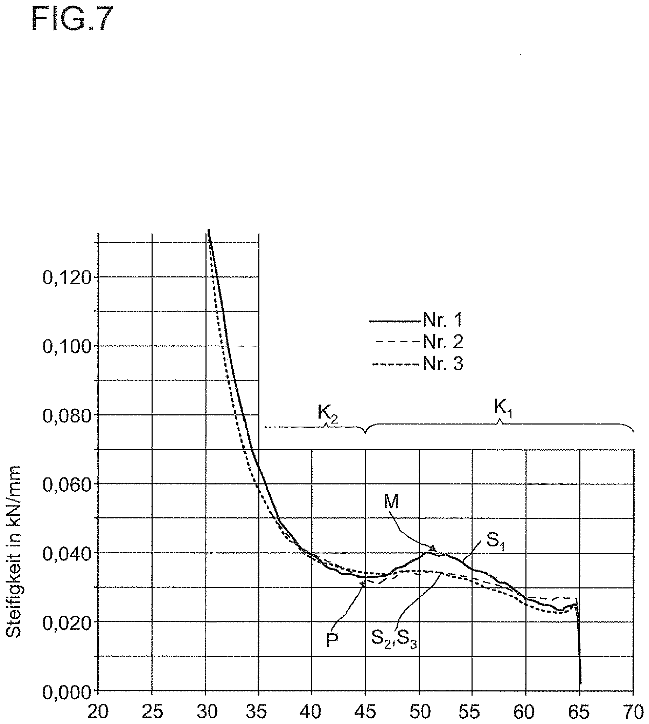

Ab einer gewissen Verformung, gekennzeichnet in Fig. 6 durch Punkt P, ist die Verformung des Federelements 1 so weit fortgeschritten, dass das Material des Grundkörpers 3 im Wesentlichen (Fig. 1 bis 4) in Richtung der Pfeile 57 in Richtung des Stützrings 7 in die Aussparungen 9 hinein gewichen ist. Diese Ausweichbewegung in Richtung der Pfeile 57 macht sich in Fig. 7 bemerkbar: Der Bereich K₁ weist bei einer Steifigkeitskurve S₁ für ein Federelement aus dem Stand der Technik, welches keine Aussparungen in der Nut aufweist, ein lokales Maximum M auf. Nach Durchschreiten des Maximums M nimmt die Steifigkeit für einen kurzen Wegbereich wieder ab, um danach in etwa ab Punkt P stark anzusteigen in Sektor K₂.

Dadurch, dass aber die erfindungsgemäß ausgebildeten Federelemente Aussparungen 9 (Fig. 1 bis 5) aufweisen, kann bei einsetzender Kompression im Bereich K₁ das Material zunächst in die Aussparungen 9 ausweichen, was einen deutlich flacheren Verlauf der Steifigkeitskurven S₂, S₃ zur Folge hat. Die Kurven S₂, S₃ unterscheiden sich nur geringfügig, was auf die abweichende Anzahl von Aussparungen 9 zurückzuführen ist. Kurve S₂ repräsentiert ein Federelement mit beispielsweise 8 Aussparungen, während Kurve S₃ ein Federelement mit beispielsweise 10 Aussparungen repräsentiert. Beide Graphen verlaufen annähernd streng monoton steigend, jedenfalls aber deutlich gleichmäßiger ansteigend als die Kurve S₁ gemäß dem Stand der Technik.

In Analogie zum Einbau in einer Prüfanordnung 50 würde sich der gleiche Kraft/Weg-Verlauf wie in Fig. 6 und auch der gleiche Steifigkeitsverlauf wie in Fig. 7 für die erfindungsgemäßen Federelemente 1 ergeben, wenn sie in einem Fahrzeugstoßdämpfer eingebaut wären.

## Patentansprüche

1. Federelement (1) für einen Fahrzeugstoßdämpfer, mit
einer Längsachse (L) und einem sich entlang der Längsachse (L) erstreckenden Grundkörper (3), der elastisch zwischen einem unkomprimierten Grundzustand und einem in Richtung der Längsachse (L) komprimierten Zustand verformbar ist,
einer außen am Grundkörper (3) umlaufenden Nut (5), und
einem in der Nut (5) angeordneten Stützring (7), **dadurch gekennzeichnet, dass** im Grundzustand des Grundkörpers (3) eine oder mehrere Aussparungen (9) zwischen dem Stützring (7) und dem Grundkörper (3) in der Nut (5) ausgebildet sind.

2. Federelement (1) nach einem der vorstehenden Ansprüche,
**dadurch gekennzeichnet, dass** die Aussparungen (9) in Form von
- zylindrischen, teilzylindrischen oder hohlzylindrischen Ausnehmungen,
- konisch verjüngten Ausnehmungen,
- teilkugelförmigen Ausnehmungen,
- polygonalen, oder teilpolyederförmigen Ausnehmungen, oder
einer Kombination mehrerer jener Formen ausgebildet sind.

3. Federelement (1) nach einem der vorstehenden Ansprüche,
**dadurch gekennzeichnet, dass** mehrere Aussparungen (9) vorgesehen und gleichmäßig über den Umfang der Nut (5) verteilt angeordnet sind.

4. Federelement (1) nach einem der vorstehenden Ansprüche,
**dadurch gekennzeichnet, dass** der Grundkörper (3) teilweise oder vollständig aus einem Elastomer besteht, vorzugsweise aus einem Gummi und/oder einem Polyisocyanat-Polyadditionsprodukt.

5. Federelement (1) nach einem der vorstehenden Ansprüche,
wobei zwischen dem Stützring (7) und der einen oder den mehreren Aussparungen (9) ein Spalt ausgebildet ist, der das Entweichen von Luft ermöglicht.

6. Federelement (1) nach einem der vorstehenden Ansprüche,
wobei der Stützring (7) teilweise aus einem Elastomer (10) besteht, vorzugsweise aus Gummi, und einen mit dem Elastomer (10) ummantelten Metallkern (8) aufweist.

7. Fahrzeugstoßdämpfer (50), mit
einem Stütztopf (51),
einer relativ zu dem Stütztopf (51) in Richtung einer Längsachse (L) bewegbar gelagerten Dämpferkappe (53), und
einem Federelement (1) mit einem sich entlang der Längsachse (L) erstreckenden Grundkörper (3), der elastisch zwischen einem unkomprimierten Grundzustand und einem in Richtung der Längsachse (L) komprimierten Zustand verformbar ist, einer außen am Grundkörper umlaufenden Nut (5), und einem in der Nut (5) angeordneten Stützring (7), durch gekennzeichnet, dass im unkomprimierten Zustand mehrere Aussparungen (9) zwischen dem Stützring (7) und dem Grundkörper (3) in der Nut (5) ausgebildet sind.

8. Fahrzeugstoßdämpfer nach Anspruch 7,
**dadurch gekennzeichnet, dass** das Federelement (1) nach einem der Ansprüche 1 bis 6 ausgebildet ist.

9. Fahrzeug, insbesondere Personenkraftfahrzeug, mit einer Anzahl von Fahrzeugstoßdämpfern (50),
wobei mindestens einer, vorzugsweise mehrere oder sämtliche der Fahrzeugstoßdämpfer nach einem der Ansprüche 7 oder 8 ausgebildet sind.

10. Verwendung eines Federelements als Hauptstoßdämpfer oder als Zusatzfeder in einem Fahrzeugstoßdämpfer (50), wobei das Federelement (1) nach einem der Ansprüche 1 bis 6 ausgebildet ist.

## Claims

1. A spring element (1) for a vehicle shock absorber, having
a longitudinal axis (L) and a base body (3) which extends along the longitudinal axis (L) and can be resiliently deformed between an uncompressed basic state and a state in which it is compressed in the direction of the longitudinal axis (L),
a groove (5) which runs around the outside of the base body (3), and
a supporting ring (7) which is arranged in the groove (5), wherein, in the basic state of the base body (3), one or more cutouts (9) are formed between the supporting ring (7) and the base body (3) in the groove (5).

2. The spring element (1) as claimed in one of the preceding claims,
wherein the cutouts (9) are embodied in the form of
- cylindrical, partially cylindrical or hollow-cylindrical recesses,
- conically tapering recesses,
- partially spherical recesses,
- polygonal or partially polyhedron-shaped recesses or
a combination of a plurality of those shapes.

3. The spring element (1) as claimed in either of the preceding claims,
wherein a plurality of cutouts (9) are provided and are arranged distributed uniformly over the circumference of the groove (5).

4. The spring element (1) as claimed in one of the preceding claims,
wherein the base body (3) is partially or completely composed of an elastomer, preferably of a rubber and/or a polyisocyanate-polyaddition product.

5. The spring element (1) as claimed in one of the preceding claims,
wherein a gap which permits air to escape is formed between the supporting ring (7) and the one or more cutouts (9).

6. The spring element (1) as claimed in one of the preceding claims,
wherein the supporting ring (7) is partially composed of an elastomer (10), preferably of rubber, and has a metal core (8), which is encased by the elastomer (10).

7. A vehicle shock absorber (50), having
a supporting pot (51),
a damper cap (53) which is mounted so as to be movable relative to the supporting pot (51), in the direction of a longitudinal axis (L), and
a spring element (1) having a base body (3) which extends along the longitudinal axis (L) and can be resiliently deformed between an uncompressed basic state and a state in which it is compressed in the direction of the longitudinal axis (L),
a groove (5) which runs around the outside of the base body, and
a supporting ring (7) which is arranged in the groove (5),
wherein, in the uncompressed state, a plurality of cutouts (9) are formed between the supporting ring (7) and the base body (3) in the groove (5).

8. The vehicle shock absorber as claimed in claim 7, wherein the spring element (1) is embodied as claimed in one of claims 1 to 6.

9. A vehicle, in particular a passenger motor vehicle, having a number of vehicle shock absorbers (50), wherein at least one vehicle shock absorber, and preferably a plurality or all thereof, is/are embodied as claimed in either of claims 7 and 8.

10. The use of a spring element as a main shock absorber or as an additional spring in a vehicle shock absorber (50), wherein the spring element (1) is embodied as claimed in one of claims 1 to 6.

## Revendications

1. Elément de ressort (1) pour un amortisseur de véhicule, comprenant
un axe longitudinal (L) et un corps de base (3) s'étendant le long de l'axe longitudinal (L) et qui est déformable élastiquement entre un état de base non comprimé et un état comprimé en direction de l'axe longitudinal (L),
une rainure (5) périphérique située à l'extérieur sur le corps de base (3), et
une bague d'appui (7) disposée dans la rainure (5),
**caractérisé en ce qu'**à l'état de base du corps de base (3), un ou plusieurs évidements (9) sont réalisés entre la bague d'appui (7) et le corps de base (3) dans la rainure (5).

2. Elément de ressort (1) selon l'une quelconque des revendications précédentes, **caractérisé en ce que** les évidements (9) sont réalisés sous la forme
- d'évidements cylindriques, partiellement cylindriques ou cylindriques creux,
- d'évidements coniques,
- d'évidements partiellement sphériques,
- d'évidements polygonaux ou partiellement polyédriques, ou
d'une combinaison de plusieurs de ces formes.

3. Elément de ressort (1) selon l'une quelconque des revendications précédentes, **caractérisé en ce que** plusieurs évidements (9) sont prévus et répartis uniformément sur la circonférence de la rainure (5).

4. Elément de ressort (1) selon l'une quelconque des revendications précédentes, **caractérisé en ce que** le corps de base (3) est composé partiellement ou complètement d'un élastomère, de préférence d'un caoutchouc et/ou d'un produit de polyaddition de polyisocyanate.

5. Elément de ressort (1) selon l'une quelconque des revendications précédentes, dans lequel, entre la bague d'appui (7) et les un ou plusieurs évidements (9), un entrefer est réalisé qui laisse s'échapper l'air.

6. Elément de ressort (1) selon l'une quelconque des revendications précédentes, dans lequel la bague d'appui (7) est composée partiellement d'un élastomère (10), de préférence de caoutchouc, et présente un noyau métallique (8) enrobé dans l'élastomère (10).

7. Amortisseur de véhicule (50), comprenant
un pot de stabilisation (51),
un capuchon d'amortisseur (53) monté mobile par rapport au pot de stabilisation (51) en direction d'un axe longitudinal (L), et
un élément de ressort (1) muni d'un corps de base (3) s'étendant le long de l'axe longitudinal (L) et qui est déformable élastiquement entre un état de base non comprimé et un état comprimé en direction de l'axe longitudinal (L),
une rainure (5) périphérique située à l'extérieur sur le corps de base, et
une bague d'appui (7) disposée dans la rainure (5),
**caractérisé en ce qu'**à l'état non comprimé, plusieurs évidements (9) sont réalisés entre la bague d'appui (7) et le corps de base (3) dans la rainure (5) .

8. Amortisseur de véhicule selon la revendication 7, **caractérisé en ce que** l'élément de ressort (1) est réalisé selon l'une quelconque des revendications 1 à 6.

9. Véhicule, en particulier véhicule automobile, comprenant un nombre d'amortisseurs de véhicule (50), dans lequel au moins un, de préférence plusieurs ou tous les amortisseurs de véhicule sont réalisés selon l'une quelconque des revendications 7 et 8.

10. Utilisation d'un élément de ressort comme amortisseur principal ou comme ressort auxiliaire dans un amortisseur de véhicule (50), l'élément de ressort (1) étant réalisé selon l'une quelconque des revendications 1 à 6.
